Europäisches Patentamt

European Patent Office

Office européen des brevets

(11) Veröffentlichungsnummer : **0 085 309**
**B1**

# (12) EUROPÄISCHE PATENTSCHRIFT

(45) Veröffentlichungstag der Patentschrift :
11.12.85

(21) Anmeldenummer : 83100197.9

(22) Anmeldetag : 12.01.83

(51) Int. Cl.⁴ : **C 09 D 3/72**

(54) **Verwendung von Klarlacken auf Basis von organischen Polyisocyanaten zur Beschichtung von Flächengebilden auf Basis von Polyvinylchlorid.**

(30) Priorität : 23.01.82 DE 3202166

(43) Veröffentlichungstag der Anmeldung :
10.08.83 Patentblatt 83/32

(45) Bekanntmachung des Hinweises auf die Patenterteilung : 11.12.85 Patentblatt 85/50

(84) Benannte Vertragsstaaten :
BE DE FR GB IT NL SE

(56) Entgegenhaltungen :
DE-A- 2 845 514

(73) Patentinhaber : BAYER AG
Konzernverwaltung RP Patentabteilung
D-5090 Leverkusen 1 Bayerwerk (DE)

(72) Erfinder : Kubitza, Werner, Dipl.-Ing.
Eduard-Spranger-Strasse 22
D-5090 Leverkusen 3 (DE)
Erfinder : Mennicken, Gerhard, Dr.
Am Wasserturm 16
D-5090 Leverkusen 3 (DE)

Jouve, 18, rue St-Denis, 75001 Paris, France

EP 0 085 309 B1

## Beschreibung

Die Erfindung betrifft die Verwendung eines neuartigen Klarlacks, welcher im wesentlichen aus, bei Raumtemperatur flüssigen, organischen Polyisocyanaten besteht, zur Beschichtung von Flächengebilden auf Basis von Polyvinylchlorid.

Die Lackierung von Flächengebilden auf Basis von PVC, beispielsweise von Fußbodenbelägen oder Wandverkleidungen aus weichgemachtem PVC zum Schutz gegen die Einwirkung von Chemikalien oder Abrieb ist bekannt. Bislang wurden für dieses Einsatzgebiet u. a. lösungsmittelhaltige Klarlacke eingesetzt, deren Bindemittel aus Polyacrylaten oder linearen Polyurethan-Polyharnstoffen besteht. Wegen des im allgemeinen hohen Molekulargewichts dieser Bindemittel erfordert deren Einsatz die Mitverwendung großer Mengen an organischen Lösungsmitteln. Die mit derartigen, physikalisch trocknenden Lacken hergestellten Beschichtungen weisen im übrigen eine nur unzureichende Widerstandsfähigkeit gegenüber lösenden organischen Substanzen auf. Auch die üblichen Zweikomponenten-Polyurethanlacke auf Basis von höherfunktionellen Polyisocyanaten und geeigneten hydroxifunktionellen Reaktionspartnern wurden bereits zur Beschichtung von PVC verwendet. Der Vorteil dieser Beschichtungsmittel ist in der deutlich verbesserten Chemikalien- und Lösungsmittelbeständigkeit im Vergleich zu den genannten physikalisch trocknenden Beschichtungsmittel zu sehen. Nachteilhaft ist jedoch auch hier die zwingend erforderliche Mitverwendung hoher Anteile an organischen Lösungsmitteln und der allen Zweikomponenten-Systemen anhaftende Nachteil einer begrenzten Verarbeitungszeit.

Nunmehr wurde überraschend gefunden, daß die nachstehend näher beschriebenen erfindungsgemäßen Beschichtungsmittel, welche im wesentlichen aus bestimmten, bei Raumtemperatur flüssigen Polyisocyanaten bestehen, hervorragend als Klarlack für Flächengebilde auf Basis von PVC geeignet sind. Diese Beobachtung ist auch im Hinblick auf die Lehre der De-OS 2 845 514 überraschend, da gemäß dieser Vorveröffentlichung als Bindemittel für Einkomponenten-Lacke Gemische aus Lackpolyisocyanaten mit bestimmten Monoisocyanaten eingesetzt werden müssen, und da in der Vorveröffentlichung bezüglich der Eignung der dort beschriebenen Gemische speziell zur Beschichtung von PVC keine Aussagen gemacht werden.

Gegenstand der vorliegenden Erfindung ist die Verwendung von, unter dem Einfluß von Luftfeuchtigkeit aushärtbaren, bei 23 °C eine Viskosität von 60 bis 2 500 mPas · s aufweisenden Klarlacken, bestehend aus

a) mindestens einem bei Raumtemperatur flüssigen Biuret- oder Isocyanuratgruppen und gegebenenfalls Uretdiongruppen aufweisenden Lackpolyisocyanat mit einem NCO-Gehalt von 10-30 Gew.-%,

b) 0 bis 15 Gew.-%, bezogen auf Gesamtmischung, gegen- über Isocyanatgruppen inerten Lacklösungsmitteln, und gegebenenfalls

c) in Klarlackformulierungen auf Polyisocyanatbasis üblichen, gegenüber Isocyanatgruppen inerten Hilfs- und Zusatzmitteln zur Beschichtung von Flächengebilden aus, gegebenenfalls weichgemachtem, Polyvinylchlorid.

Die erfindungsgemäß zu verwendenden Klarlacke weisen bei 23 °C eine Viskosität von 60 bis 2 500 mPa · s, vorzugsweise 100 bis 1 000 mPa · s auf. Da es sich bei den erfindungsgemäß zu verwendenden Klarlacken vorzugsweise um lösungsmittelfreie Systeme handelt, entspricht vorzugsweise auch die in den Klarlacken als Hauptkomponente vorliegende Polyisocyanatkomponente diesen Viskositätsbedingungen.

Bei der Komponente a) der erfindungsgemäß zu verwendenden Klarlacke handelt es sich um « Lackpolyisocyanate », d. h. insbesondere um Biuret- oder Isocyanuratgruppen und gegebenenfalls Uretdiongruppen aufweisende Polyisocyanate eine über 2, vorzugsweise zwischen 2,5 und 6 liegenden mittleren NCO-Funktionalität. Diese « Lackpolyisocyanate » weisen vorzugsweise aromatisch, cycloaliphatisch oder aliphatisch gebundene Isocyanatgruppen auf. Für lichtechte Beschichtungen werden Polyisocyanate mit aliphatisch und/oder cycloaliphatisch gebundenen Isocyanatgruppen bevorzugt. Die Lackpolyisocyanate werden durch an sich bekannte Modifizierung von einfachen organischen Diisocyanaten unter Biuret- oder Isocyanuratbildung bzw. unter gleichzeitiger Isocyanurat- und Uretdionbildung hergestellt, wobei jeweils nach der Modifizierungsreaktion eventuell noch vorliegende Überschüsse an nicht modifiziertem monomeren Ausgangsisocyanat in an sich bekannter Weise vorzugweise durch Destillation so entfernt werden, daß in den erfindungsgemäß zu verwendenden Lackpolyisocyanaten höchstens 0,7, vorzugsweise höchstens 0,5 Gew.-% an überschüssigem Diisocyanat vorliegen. Die erfindungsgemäß zu verwendenden Lackpolyisocyanate weisen im allgemeinen einen NCO-Gehalt, bezogen auf Feststoff, im Bereich von 10 bis 30 Gew.-% auf, und stellen bei Raumtemperatur Flüssigkeiten dar, die vorzugsweise den oben genannten Viskositätsbedingungen entsprechen.

Geeignete Diisocyanate zur Herstellung der Lackpolyisocyanate sind beispielsweise 2.4- und-/oder 2,6-Diisocyanatotoluol, 2,4'-Diisocyanatodicyclohexylmethan, 4,4'-Diisocyanato-dicyclohexylmethan, Hexamethylendiisocyanat oder 1-Isocyanato-3,3,5-trimethyl-5-isocyanato-methylcyclohexan (IPDI). Gemische dieser Diisocyanate können zur Herstellung der Lackpolyisocyanate selbstverständlich auch eingesetzt werden. Hexamethylendiisocyanat stellt das bevorzugte Ausgangsmaterial zur Herstellung der erfindungsgemäßen Komponente a) dar. Demzufolge stellen Tris-(isocyanatohexyl)-biuret, Tris-(isocyanatohexyl)-isocyanurat, Gemische dieser modifizierten Polyisocyanate mit ihren höheren Homologen oder die durch phosphinkatalysierte Oligomerisation von Hexamethylendiisocyanat erhältliche Gemische aus Tris-(isocyanatohexyl)-isocyanurat mit Bis-(isocyanatohexyl)-uretdion die bevorzugten, als Komponente a) einzusetzenden Polyisocyanate dar.

Die erfindungsgemäß zu verwendenden Klarlacke können zur Einstellung der Viskosität erforderlichenfalls geringe Mengen an, gegenüber Isocyanatgruppen inerten Lösungsmitteln, vorzugsweise in Mengen von 0 bis 15 Gew.-%, bezogen auf Gesamtmischung, enthalten. Beispiele derartiger Lösungsmittel sind Butylacetat, Methyl-ethylketon, Methyl-isobutylketon, Ethoxyethylacetat, Toluol, Xylol oder Gemische derartiger Lösungsmittel. Vorzugsweise handelt es sich bei den erfindungsgemäß zu verwendenden Klarlacken jedoch um lösungsmittelfreie Systeme.

Die erfindungsgemäß zu verwendenden Klarlacke können außer diesen Komponenten gegebenenfalls auch noch weitere, in Klarlacken auf Polyisocyanatbasis übliche, gegenüber Isocyanatgruppen inerte Hilfs- und Zusatzmittel enthalten. Hierzu gehören beispielsweise Verlaufshilfsmittel, Katalysatoren für die Isocyanat-Wasser-Reaktion, insbesondere organische Zinnverbindungen der an sich bekannten Art wie z. B. Dibutylzinndilaurat oder die Elastizität erhöhende Weichmacheröle bzw. -harze.

Die Klarlacke werden erfindungsgemäß zur Beschichtung von Flächengebilden auf Basis von Polyvinylchlorid eingesetzt. Unter « Polyvinylchlorid » soll in diesem Zusammenhang nicht nur das reine Vinylchlorid-Homopolymerisat verstanden werden, sondern vielmehr auch die an sich bekannten Pfropfpolymerisate des Vinylchlorids beispielsweise unter Verwendung von Ethylen-Vinylester-Copolymeren als Pfropfgrundlage oder die bekannten Copolymerisate des Vinylchlorids beispielsweise mit Vinylidenchlorid, wobei die Pfropf- bzw. Copolymerisate im allgemeinen zumindest zu 50 Gew.-% aus einpolymerisiertem Vinylchlorid bestehen. Vorzugsweise bestehen die erfindungsgemäß zu beschichtenden Flächengebilde aus Polymerisaten der genannten Art, die 5 bis 30 Gew.-%, vorzugsweise 10 bis 30 Gew.-% an üblichen PVC-Weichmachern enthalten. Beispiele für derartige Weichmacher sind $C_{10}$-$C_{18}$-Alkansulfonsäureester des Phenols oder Kresols, Dialkylphthalate mit 1 bis 10 Kohlenstoffatomen im Alkylrest wie Dimethyl-, Dioctyl- oder Dodecylphthalat, oder PVC-Weichmacher wie z. B. Dicyclohexylphthalat, Trichlorethylphosphat, Triphenylphosphat, Diphenyl-kresylphosphat, Adipinsäure-benzyl-octyl-ester oder polymere Weichmacher auf Basis von Polyadipaten. Selbstverständlich können die Flächengebilde auch die üblichen Zusatzmittel wie z. B. Füllstoffe, Pigmente Stabilisatoren und dergleichen enthalten.

Die erfindungsgemäß zu verwendenden Klarlacke können nach den üblichen Applikationsmethoden, wie z. B. Streichen, Rollen, Spritzen sowie bei industrieller, kontinuierlicher Verarbeitung Rakeln oder Walzen aufgetragen werden. Im allgemeinen werden die Klarlacke in, einer Trockenfilmstärke von 0,01 bis 0,5 mm entsprechenden, Mengen eingesetzt.

Die erfindungsgemäß zu verwendenden Klarlacke sind bei Ausschluß von Luftfeuchtigkeit lagerbeständig und härten durch den Einfluß von Feuchtigkeit zu zähelastischen Filmen bzw. Beschichtungen aus. Die für den Reaktionsablauf erforderliche Feuchtigkeit kann als Luftfeuchte zur Verfügung stehen, es ist jedoch auch möglich, z. B. bei kontinuierlichen Verarbeitungsanlagen, die erforderliche Feuchtigkeit als Wasserdampf künstlich zuzuführen. Die Aushärtung der bei der erfindungsgemäßen Verwendung erhaltenen Beschichtungen erfolgt vorzugsweise bei Raumtemperatur, sie kann jedoch auch forciert bei erhöhten Temperaturen beispielsweise bei 150-180 °C innerhalb weniger Minuten durchgeführt werden.

Erfindungsgemäß können besonders vorteilhaft Fußbodenbeläge oder Wandverkleidungen auf Basis von PVC mit einer chemikalien- und temperaturbeständigen Beschichtung hoher Flexibilität und Abriebfestigkeit versehen werden.

In den nachfolgenden Beispielen sind folgende Polyisocyanate verwendet worden :

Polyisocyanat A

Im Wesentlichen aus Tris-(isocyanatohexyl)-biuret bestehendes Biuret-Polyisocyanat-Gemisch, hergestellt durch Biuretisierung von Hexamethylendiisocyanat gemäß US-PS 3 903 127 unter anschließender destillativer Entfernung von überschüssigem Hexamethylendiisocyanat. NCO-Gehalt = 23,5 Gew.-%. Gehalt an freiem Hexamethylendiisocyanat = 0,7 Gew.-%, mittlere NCO-Funktionalität > 3. Viskosität ca. 2 400 mPa · s/23 °C.

Polyisocyanat B

Gemisch aus Tris-(isocyanatohexyl)-isocyanurat und Bis-(isocyanatohexyl)-uretdion, hergestellt durch phosphinkatalysierte Oligomerisation von Hexamethylendiisocyanat unter anschließender destillativer Entfernung von überschüssigem Hexamethylendiisocyanat. NCO-Gehalt ; 22,5 Gew.-%, Gehalt an Hexamethylendiisocyanat = < 0,7 Gew.-%, mittlere NCO-Funktionalität ca. 3, Viskosität ca. 150 mPa · s/23°C.

Beispiel 1

100 Gew.-Tle. Polyisocyanat B werden mit 0,3 Gew.-Tln. Dibutylzinndilaurat als Katalysator und 0,06 % eines handelsüblichen Siliconöls (Siliconöl PL, BAYER AG, Leverkusen) als Verlaufmittel gemischt. Man erhält einen in Abwesenheit von Feuchtigkeit praktisch unbegrenzt lagerfähigen Klarlack einer Viskosität von ca. 100 mPa · s/23 °C. Mittels Rolle in einer Schichtdicke von 0,04 mm jeweils auf PCV-Fußbödenbeläge, bestehend aus a) 70 Gew.-Teilen PVC-Microperl-Polymerisat, 29 Gew.-Teilen Benzylbutylphthalat und 1 Gew.-Teil Zink-Stabilisator, bzw. aus b) 17 Gew.-Teilen Emulsions-PVC, 13 Gew.-Teilen Weichmacher auf Basis von $C_{10}$-$C_{20}$-Alkansulfonsäureestern des Phenols, 70 Gew.-Teilen Calciumcarbonat (Füllstoff), 1 Gew.-Teile Titandioxid und 0,5 Gew.-Teilen Diphenylthioharnstoff, aufgetragen trocknen die Beschichtungen bei Raumtemperaturen innerhalb von 2 bis 3 Stunden bis zur Staubfreiheit, 5-7 Stunden bis zur Griffestigkeit und sind nach Trocknung über Nacht bei Raumtemperatur begehbar. Dei Oberflächen der getrockneten Filme sind seidenglänzend und zeichnen sich durch Haftung auf dem PVC-Kunststoff, Chemikalien- und Lösungsmittelfestigkeit, Flexibilität und Abriebfestigkeit aus. Die Abriebwerte im Taber Abraser liegen unterhalb 20 mg bei 1 000 Umdrehungen, Schleifrolle CS 10 und einer Belastung von 1 kg pro Rolle.

## Beispiel 2

Eine Formulierung gemäß Beispiel 1 wird in einer Schichtdicke von ca. 0,04 mm auf die PVC-Fußbodenmaterialien gemäß Beispiel 1 aufgetragen und direkt nach dem Auftrag ca. 3 Minuten bei 150 °C eingebrannt. Für ausreichende Zufuhr von Feuchtigkeit ist durch Aufstellen von Wasserschalen im Einbrennaggregat gesorgt. Nach der oben angegebenen Einbrennzeit und kurzem Abkühlen sind die Flächen klebfrei und aufrollbar. Die Filme haben eine seidenglänzende Oberfläche und entsprechen bezüglich ihrer mechanischer Eigenschaften den Belägen gemäß Beispiel 1.

## Beispiel 3

Eine Mischung aus 50 Gew.-Tln. Polyisocyanat B und 50 Gew.-Tln. Polyisocyanat A, 0,6 Gew.-Tln. Dibutylzinndilaurat und 0,06 Gew.-Tln. eines Siliconöls ergibt einen in Abwesenheit von Feuchtigkeit praktisch unbegrenzt lagerfähigen Klarlack der Viskosität 360 mPa · s/23 °C. Nach Auftrag auf die PVC-Fußbodenmaterialien gemäß Beispiel 1 in einer Schichtdicke von jeweils 0,04 mm bilden die Beschichtungen nach Trocknung über Nacht bei Raumtemperatur glänzende, haftfeste, abriebbeständige Filme. Der Abtrieb im Taber Abraser gemäß den in beispiel 1 zitierten Bedingungen ist ebenfalls unter 20 mg.

## Beispiel 4

100 Gew.-Tle Polyisocyanat B werden mit 15 Gew.-Tln. eines handelsüblichen, hydroxylgruppenfreien Weichharzes auf Polyesterbasis (P 65 der BAYER AG, Leverkusen) gemischt und mit 0,3 Gew.-Tln. Dibutylzinndilaurat, sowie 0,06 Gew.-Tln. des Siliconöls aus Beispiel 1 versetzt. Es wird so eine in Abwesenheit von Feuchtigkeit unbegrenzt lagerfähige Formulierung einer Viskosität von 240 mPa · s/23 °C erhalten. Nach Auftrag des Klarlackes auf die PVC-Fußbodenmaterialien gemäß Beispiel 1 in einer Schichtdicke von 0,04 mm bildet sich seidenglänzende Filme, die entweder gemäß Beispiel 1 bei Raumtemperatur oder gemäß Beispiel 2 bei erhöhter Temperatur getrocknet werden können. Es werden jeweils flexible Beschichtungen erhalten, die ausgezeichnete Abriebwerte aufweisen.

## Patentansprüche

1. Verwendung von, unter dem Einfluß von Luftfeuchtigkeit aushärtbaren, bei 23 °C eine Viskosität von 60 bis 2 500 mPa · s aufweisenden Klarlacken, bestehend aus

a) mindestens einem bei Raumtemperatur flüssigen Biuret- oder Isocyanuratgruppen und gegebenenfalls Uretdiongruppen aufweisenden Lackpolyisocyanat mit einem NCO-Gehalt von 10-30 Gew.-%,

b) 0 bis 15 Gew.-%, bezogen auf Gesamtmischung, gegenüber Isocyanatgruppen inerten Lacklösungsmitteln, und gegebenenfalls

c) in Klarlackformulierungen auf Polyisocyanatbasis üblichen, gegenüber Isocyanatgruppen inerten Hilfs- und Zusatzmitteln zur Beschichtung von Flächengebilden aus, gegebenenfalls weichgemachtem, Polyvinylchlorid.

2. Verwendung gemäß Anspruch 1, dadurch gekennzeichnet, daß der Klarlack bei 23 °C eine Viskosität von 100 bis 1 000 mPa · s aufweist.

3. Verwendung gemäß Anspruch 1 und 2, dadurch gekennzeichnet, daß es sich bei den zu beschichtenden Flächengebilden um solche auf Basis von, 5 bis 30 Gew-%, bezogen auf Polymerisat, an üblichen Weichmachern enthaltenden, zumindest zu 50 Gew.-% aus einpolymerisiertem Vinylchlorid bestehenden, Homo-, Pfropf- oder Copolymerisaten des Vinylchlorids handelt.

## Claims

1. Use of clear lacquers which are capable of hardening under the influence of atmospheric moisture, have a viscosity at 23 °C of 60 to 2 500 mPa · s and consist of

a) at least one lacquer polyisocyanate which is liquid at room temperature, has an NCO content of 10-30 % by weight and contains biuret or isocyanurate groups and optionally uretdione groups,

b) 0 to 15 % by weight, based on the total mixture, of lacquer solvents which are inert towards isocyanate groups, and, optionally,

c) auxiliary agents and additives which are inert towards isocyanate groups and are customary in clear lacquer formulations based on polyisocyanates, for coating sheet products of optionally plasticised polyvinyl chloride.

2. Use according to Claim 1, characterised in that the clear lacquer has a viscosity, at 23 °C, of 100 to 1 000 mPa · s.

3. Use according to Claim 1 and 2, characterised in that the sheet products to be coated are those based on homo-, graft or co-polymers of vinyl chloride which contain 5 to 30 % by weight, based on the polymer, of customary plasticisers and consist, to an extent of a least 50 % by weight, of vinyl chloride incorporated by polymerisation.

**Revendications**

1. Utilisation de vernis transparent durcissables sous l'action de l'humidité de l'air, ayant à 23 °C une viscosité de 60 à 2 500 mPa · s, consistant en

a) au moins un polyisocyanate pour vernis, liquide à la température ambiante, présentant des groupes biurets ou des groupes isocyanurates et éventuellement des groupes uretdiones, d'une teneur en NCO de 10-30 % en poids,

b) 0 à 15 % en poids, par rapport au mélange total, de solvants pour vernis inertes vis-à-vis des groupes isocyanates et éventuellement

c) des agents auxiliaires et additifs inertes vis-à-vis des groupes isocyanates, habituels dans les compositions de vernis transparents à base de polyisocyanates pour l'enduction de structures planes en chlorure de polyvinyle éventuellement plastifié.

2. Utilisation selon la revendication 1, caractérisée en ce que le vernis transparent présente à 23 °C une viscosité de 100 à 1 000 mPa · s.

3. Utilisation selon la revendication 1 ou 2, caractérisée en ce que les structures planes à enduire sont à base d'homopolymères, de polymères greffés ou de copolymères du chlorure de vinyle consistant pour au moins 50 % en poids en chlorure de vinyle polymérisé, contenant 5 à 30 % en poids, par rapport au polymère, de plastifiants habituels.